# EUROPEAN PATENT APPLICATION

(11) **EP 1 717 802 A1**
(43) Date of publication of application: **02.11.2006**
(21) Application number: 05009102.4
(22) Date of filing: 26.04.2005
(51) Int. Cl.: G11B 7/125, G11B 7/13, G11B 7/135

(54) **PIckup for optical recording media**

(71) Applicant: DEUTSCHE THOMSON-BRANDT GMBH, 78048 Villingen-Schwenningen (DE)
(72) Inventor: Khrouchhtchev, Serguei, 78048 Villingen-Schwenningen (DE)
(74) Representative: Rittner, Karsten

(57) **Abstract**

The invention relates to a pickup (1) for optical recording media including a monitor diode (14) for light power feedback, the pickup (1) having an increased efficiency and a reduced number of components, and to an apparatus for reading from and/or writing to optical recording media including such a pickup (1).

According to the invention, a pickup (1) for optical recording media includes a light source (2) for emitting a light beam, a monitor diode (14) for obtaining a light power feedback signal, and an optical element (7) for changing a property of the light beam, wherein the optical element (7) has a surface that is inclined with respect to the optical axis and reflects a part of the light beam towards the monitor diode (14).

## Description

The invention relates to a pickup for optical recording media having an increased efficiency and a reduced number of components, and to an apparatus for reading from and/or writing to optical recording media including such a pickup.

Pickups for optical recording media usually include a front monitor diode for obtaining information about the power of the light emitted by the laser diode used for reading and/or writing. This information is then used as a feedback for regulating the laser power.

According to a known solution a leakage element such as a partially transparent mirror or a beam splitter cube is used for directing a part of the emitted light beam towards the monitor diode. As the light beam after the leakage element is not focused, light losses occur on the way to the front monitor diode. These losses decrease the signal-to-noise ratio of the laser power feedback. To circumvent this problem an additional focusing lens can be placed before the front monitor diode to increase the signal-to-noise ratio. An example of such a solution is described in US 2004/0125724.

This solution has the disadvantage that the leakage element causes light losses both on the way to the optical recording medium and from the optical recording medium. Consequently laser diodes with a higher laser power are necessary, which leads to increased cost and power consumption.

According to a further known solution, as disclosed for example in US 5,600,621, the pickup is provided with special polished surfaces or foil mirrors, which reflect an outer part of the light beam towards the front monitor diode. Alternatively, light losses at apertures can be used as well. These losses occur, for example, when an optical element has a smaller diameter than the light beam. In this case light which does not impinge on the optical element can be used for laser power feedback.

This solution has the disadvantage that special ring-shaped or segmented photodetectors are needed for detecting the light. In addition, a strongly elliptical light beam is required, where an outer part of the light beam is generally not used. While this is the case in pickups used only for playback, where the axes of the light beam have a ratio of 1:3.4 for high power laser diodes as used in recorder pickups this ratio is 1:1.6 and practically the complete light beam is used.

All known solutions have the disadvantage that the light beam used for laser power feedback is not focused and that further measures are needed to increase the signal-to-noise ratio. As described in US 2004/0125724, an additional focusing lens can be provided for this purpose. Alternatively, a photodetector with a high gain amplification or a larger photodetector can be used. While the former still yields a reduced signal-to-noise ratio, the latter leads to an increased size of the pickup.

It is an object of the present invention to propose a pickup for optical recording media including a monitor diode for laser power feedback, which has an increased efficiency and a reduced number of components.

This object is achieved by a pickup for optical recording media, with a light source for emitting a light beam, a monitor diode for obtaining a light power feedback signal, and an optical element for changing a property of the light beam, wherein the optical element has a surface that is inclined with respect to the optical axis and reflects a part of the light beam towards the monitor diode. The inclined surface reflects a fraction of the light beam out of the main beam path. This fraction is used for the laser power feedback. As reflection at the optical element occurs anyway, no additional losses are introduced. In addition, it is no longer necessary to provide a special leakage element, which reduces the cost of the pickup. Advantageously, the angle between the inclined surface of the optical element and the optical axis is between 2° and 6°, in order not to degrade the main function of the optical element. The inclination is either achieved by rotating the optical element with respect to the optical axis, or by using a special optical element having at least one surface prepared such that it is inclined relative to the optical axis.

Preferably, the pickup further includes a collimator for collimating the light beam emitted by the light source, and a focusing lens for focusing the light beam onto an optical recording medium, the optical element being located between the collimator and the focusing lens. In this way the collimator is used to focus the light beam reflected by the optical element onto the monitor diode. Hence no additional focusing lens is necessary as in the prior art solutions. At the same time any monitor diode available on the market can be used instead of an expensive monitor diode with high gain settings.

Favorably, the optical element is a quarter wave plate. A quarter wave plate is present in any pickup using a polarization beam splitter for directing the reflected beam towards a photodetector. Therefore, no additional optical element is necessary. A small angle of inclination of the quarter wave plate with respect to the optical axis does not lead to any significant degradation of the function of the quarter wave plate. Of course, instead of the quarter wave plate also other optical elements, which are present in the beam path, can be used for obtaining the laser power feedback. Examples of such optical elements are liquid crystal elements, which are often used for compensating for optical aberrations, or filters.

The optical elements used in a pickup usually have surfaces with an anti-reflection coating. In this case the sum of the reflection of both surfaces is about 1%. This is sufficient for obtaining the feedback signal, hence the optical elements can remain unchanged. According to a further refinement, at least one surface of the optical element is not provided with an anti-reflection coating. This increases the amount of light that is reflected by this surface towards the monitor diode and hence increases the signal-to-noise ratio of the laser power feedback signal.

An apparatus for reading from and/or writing to optical recording media preferably includes a pickup according to the invention. This allows to reduce the manufacturing cost and the size of such an apparatus.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: shows a pickup for optical recording media according to the invention;
- Fig. 2: shows a further embodiment of a pickup according to the invention;
- Fig. 3: depicts a photodetector including a monitor diode; and
- Fig. 4: depicts a pickup for optical recording media according to the prior art.

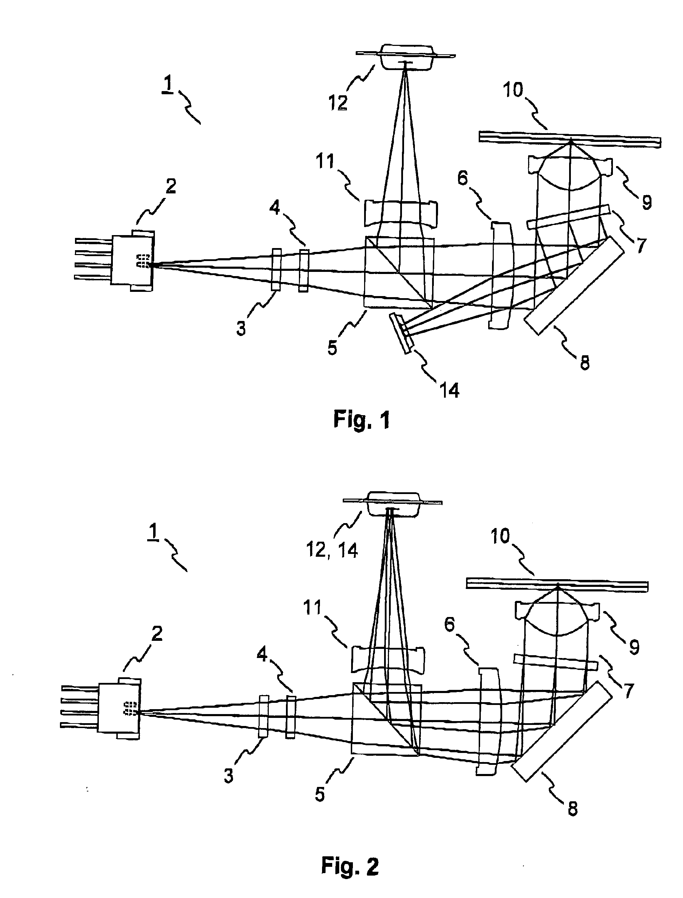

Fig. 1 shows a pickup 1 for optical recording media according to the invention. A twin laser diode 2 emits either a light beam for reading from or writing to a CD (compact disk) or a light beam for reading from or writing to a DVD (digital versatile disk). Both light beams are linearly polarized. The emitted light beam passes a grating 3, 4 for generating additional partial beams for tracking. In the figure the first grating 3 is adapted to the light beam used for CD, while the second grating 4 is adapted to the light beam used for DVD. The light beam then passes a polarization beam splitter 5, before it is collimated by a collimator 6. The collimated light beam is then directed towards a focusing lens 9 by a mirror 8, The focusing lens 9 focuses the light beam onto an optical recording medium 10 and collimates the light reflected by the optical recording medium 10. Located between the mirror 8 and the focusing lens 9 is a quarter wave plate 7, which transforms the linearly polarized light beam into a circularly polarized light beam. When the reflected light beam passes the quarter wave plate 7, it is transformed again into a linearly polarized light beam. However, its direction of polarization is perpendicular to the direction of polarization of the light beam emitted by the twin laser diode 2. The reflected light beam traverses the collimator 6 and is directed towards a photodetector 12 by the polarization beam splitter 5. A further focusing lens 11 is provided for focusing the reflected light beam onto the photodetector 12. In order to obtain a laser power feedback the quarter wave plate 7 is slightly inclined with respect to the optical axis, e.g. by angle of 2° to 6°. A small fraction of the light beam coming from the mirror 8 is reflected by the quarter wave plate 7, returned to the mirror 8 and directed through the collimator 6 onto a front monitor diode 14. As the quarter wave plate 7 has an anti-reflection coating, its reflectance is only about 0.5% from each surface. The reflectance can be increased by a factor of up to 10 if one surface of the quarter wave plate 7 is kept without an anti-reflection coating. By tilting the quarter wave plate 7 a laser power feedback is obtained without introducing any additional light losses in the system, which leads to an increased system efficiency. A further advantage is that the collimator 6 is also used for focusing the light beam reflected by the quarter wave plate 7 onto the front monitor diode 14. This allows to avoid an additional focusing lens for laser power feedback without the need of providing an expensive high gain front monitor diode 14.

A further embodiment of a pickup for optical recording media according to the invention is shown in Fig. 2. The pickup is similar to the pickup depicted in Fig. 1. In this embodiment, however, the inclination of the quarter wave plate 7 is smaller and towards the opposite direction. That part of the light which is reflected by the back side of the quarter wave plate 7, i.e. whose direction of polarization is perpendicular to the direction of polarization of the light beam emitted by the twin laser diode 2, passes the collimator 6 and is directed towards the photodetector 12 by the polarization beam splitter 5. For obtaining the laser power feedback signal the photodetector 12 includes the monitor diode 14. A schematic layout of the detector elements of the photodetector 12 is shown in Fig. 3. Besides the monitor diode 14, the photodetector 12 also includes an array 15 of detector elements used for generating a data signal, focusing, and tracking both for CD and DVD. As such an array 15 is well known to a person skilled in the art, a detailed description of this array 15 is omitted.

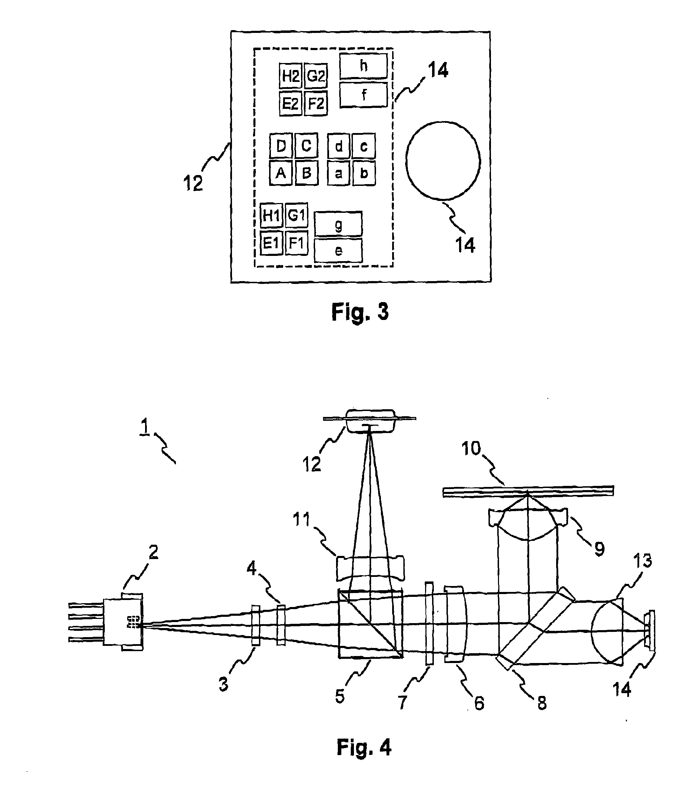

In Fig. 4 a pickup for optical recording media according to the prior art is depicted. The pickup largely corresponds to the pickup shown in Fig. 1. However, in this case the quarter wave plate 7 is located before the collimator 6. This ensures that light reflected by the quarter wave plate 7 is not focused onto the photodetector 12 by the collimator 6, which would otherwise lead to a noisy information signal. In order to obtain a laser power feedback, the mirror 8 is partially transmissive. The transmitted light beam is focused onto the front monitor diode 14 by an additional focusing lens 13.

## Claims

1. Pickup (1) for optical recording media, with a light source (2) for emitting a light beam, a monitor diode (14) for obtaining a light power feedback signal, and an optical element (7) for changing a property of the light beam, **characterized in that** the optical element (7) has a surface that is inclined with respect to the optical axis and reflects a part of the light beam towards the monitor diode (14).

2. Pickup (1) according to claim 1, further including a collimator (6) for collimating the light beam emitted by the light source (2), and a focusing lens (9) for focusing the light beam onto an optical recording medium (10), wherein the optical element (7) is located between the collimator (6) and the focusing lens (9).

3. Pickup (1) according to claim 1 or 2, wherein the monitor diode (14) is part of a photodetector (12) for detecting light reflected by an optical recording medium (10).

4. Pickup (1) according to one of claims 1 to 3, wherein the light beam reflected by the optical element (7) is focused onto the monitor diode (14) by the collimator (6).

5. Pickup (1) according to one of claims 1 to 4, wherein the optical element (7) is a quarter wave plate (7).

6. Pickup (1) according to one of claims 1 to 4, wherein the optical element (7) is a liquid crystal element.

7. Pickup (1) according to one of claims 1 to 6, wherein the angle between the inclined surface of the optical element (7) and the optical axis is between 2° and 6°.

8. Pickup (1) according to one of claims 1 to 7, wherein only one surface of the optical element (7) has an anti-reflection coating.

9. Photodetector (12) for detecting light reflected by an optical recording medium (10), **characterized in that** it includes a monitor diode (14) for obtaining a light power feedback signal.

10. Apparatus for reading from and/or writing to optical recording media, **characterized in that** it includes a pickup (1) according to one of claims 1 to 8 and/or a photodetector (12) according to claim 9.
